# EUROPÄISCHE PATENTANMELDUNG

(11) **EP 2 123 546 A1**
(43) Veröffentlichungstag der Anmeldung: **25.11.2009**
(21) Anmeldenummer: 09006884.2
(22) Anmeldetag: 22.05.2009
(51) Int. Cl.: B62J 17/00

(54) **Schutzverkleidung für ein Fahrrad**

(30) Priorität: 22.05.2008 CH 7732008
(71) Anmelder: Tribecraft AG, 8045 Zürich (CH)
(72) Erfinder: Irányi, Daniel, 6312 Steinhausen (CH); Schütz, Martin, 8045 Zürich (CH)

(57) **Zusammenfassung**

Die vorliegende Erfindung betrifft eine Schutzverkleidung für ein Fahrrad umfassend ein Basisteil (4), das zwei Seitenlappen (6a,6b) und einen zwischen den Seitenlappen (6a,6b) angeordneten Mittelbereich (8) umfasst. Dabei sind die Seitenlappen (6a,6b) dazu bestimmt, auf jeweils einer Seite des Fahrrads angeordnet zu werden, und der Mittelbereich (8) ist dazu bestimmt, im Bereich des Oberrohres des Fahrrads angeordnet zu werden. Der Mittelbereich (8) weist einen Durchlass (14) auf, welcher derart angeordnet ist, dass er im montierten Zustand von der Sattelstütze des Fahrrads durchgriffen wird. Die Schutzverkleidung der vorliegenden Erfindung ist dadurch gekennzeichnet, dass die Seitenlappen (6a,6b) jeweils einen Durchlass (18a bzw. 18b) aufweisen, welcher derart angeordnet ist, dass er im montierten Zustand von der Tretkurbelwelle des Fahrrads durchgriffen wird.

## Beschreibung

Die vorliegende Erfindung betrifft eine Schutzverkleidung für ein Fahrrad gemäss dem Oberbegriff des Anspruchs 1.

Das Fahrrad stellt ein kostengünstiges, einfach zu handhabendes, wendiges und umweltfreundliches Fortbewegungsmittel dar. Allerdings weist es den Nachteil auf, dass der Fahrradfahrer Umwelteinflüssen schutzlos ausgesetzt ist. Insbesondere bei Regen wird der Fahrkomfort somit stark beeinträchtigt. Diesem Problem wurde in der Vergangenheit mit vielerlei verschiedenen Schutzvorrichtungen Rechnung getragen, die den Fahrradfahrer vor Regen und Wind schützen sollen.

So wird etwa in DE 196 36 676 eine Kabine für ein Fahrrad offenbart, die ein formstabiles Basisteil und einen Gehäuseaufbau umfasst, der durch ein im vorderen und im hinteren Bereich des Basisteils angeordnetes Gestänge aufgespannt ist. Eine solche Kabine hat allerdings den Nachteil, dass ihre Montage relativ aufwendig und die Nutzungsschwelle somit relativ hoch ist. Ein weiterer Nachteil besteht darin, dass insbesondere das Basisteil und das Gestänge sehr sperrig sind. Dies wirkt sich negativ auf die Wendigkeit des Fahrrads auf. Überdies wird die Aerodynamik negativ beeinträchtig, sodass vom Fahrradfahrer ein zusätzlicher Kraftaufwand erbracht werden muss. Zudem nimmt die in DE 196 36 676 aufgrund ihrer Sperrigkeit auch bei Nichtgebrauch relativ viel Stauraum ein.

Alternativ dazu wird in der DE 965 474 ein Beinwetterschutz für Radfahrer vorgeschlagen, der aus einem rechteckigen, an der Lenkstange und am vorderen Schutzblech befestigten aufgeschnittenen Stoffstreifen besteht. Ein solcher Beinwetterschutz bietet lediglich einigen Schutz für die unteren vorderen Beinpartien, nicht aber für die übrigen Körperteile des Fahrradlenkers.

Demgegenüber wird in DE 100 09 241 eine Fahrradverkleidung aus zwei miteinander verbundenen Teilen vorgeschlagen, nämlich einer formstabilen Frontverkleidung und einer Textilverleidung, die den Oberkörper des Radfahrers schützen soll und seitlich bis in den Bereich der Beine heruntergezogen ist. Auch diese Konstruktion ist vor allem aufgrund der formstabilen Frontverkleidung sperrig und erfordert eine relativ komplizierte Montage.

Weiter beschreibt etwa die CH 689 261 eine Abdeckung für Fahrräder, allerdings liegt dieser Druckschrift eine vollkommen andere Aufgabe zugrunde, nämlich diejenige, eine Werbe- und Sponsorenfläche zur Verfügung zu stellen und gleichzeitig technische Details des Fahrrads zu kaschieren.

Eine weitere Schutzvorrichtung wird in FR-A-2 859 164 beschrieben, allerdings ist diese nur für Motorrad-Roller, nicht aber für Fahrräder geeignet.

Sowohl der in DE 965 474 als auch der in DE 100 09 241 beschriebenen Schutzvorrichtung für Fahrräder ist gemeinsam, dass sie lediglich einen gewissen Schutz gegen wettereinflüsse von der Frontseite her bieten.

Allerdings ist in der Praxis der Fahrradfahrer nicht nur dem von der Frontseite her auftreffenden Regenwasser ausgesetzt, sondern insbesondere auch dem Spritzwasser von der Fahrbahn, welches aufgrund der Fliehkraft von den Rädern her in Richtung des Fahrradfahrers geschleudert wird. So ist der Fahrradfahrer selbst bei ausbleibendem Regenfall immer dann einer Nässeeinwirkung ausgesetzt, wenn die Fahrbahn nass ist, also beispielsweise auch kurze Zeit nach einem Regenguss oder bei Strassenreinigungsarbeiten.

Überdies tritt in der Praxis oft das Problem auf, dass die Beinkleider des Fahrradfahrers verschmutzt werden, etwa indem sie mit den Rädern in Kontakt kommen. Das Problem der Verschmutzung ist gerade bei nassen Wetterverhältnissen besonders akut, da im erwähnten Spritzwasser von der Fahrbahn zusätzlich oft Schmutzpartikel mitgeführt werden.

Aufgabe der vorliegenden Erfindung ist es somit, eine Schutzverkleidung für ein Fahrrad zur Verfügung zu stellen, welche einfach zu handhaben ist und den Fahrradfahrer insbesondere auch vor Spritzwasser von der Fahrbahn und vor Schmutzeinwirkung schützt.

Erfindungsgemäss wird die Aufgabe durch die Schutzverkleidung gemäss Anspruch 1 gelöst. Bevorzugte Ausführ-ungsformen sind in den abhängigen Ansprüchen definiert.

Die Schutzverkleidung der vorliegenden Erfindung eignet sich für jede Art von Fahrrädern, also beispielsweise auch für Elektrofahrräder Oder Motorfahrräder.

Die Schutzverkleidung der vorliegenden Erfindung ist **dadurch gekennzeichnet, dass** die im montierten Zustand auf je einer Fahrradseite herunterhängenden Seitenlappen jeweils einen Durchlass aufweisen. Diese Durchlässe sind derart angeordnet, dass sie im montierten Zustand von der Tretkurbelwelle des Fahrrads durchgriffen werden. Somit wird zwischen dem Fahrradfahrer und den Rädern des Fahrrads eine Fläche aufgespannt, die eine wirksame Schranke für Spritzwasser von der Fahrbahn darstellt. Gleichzeitig wird durch die Schutzverkleidung das Kettenblatt bzw. die Kette gegenüber dem Fahrradfahrer abgedeckt. Dadurch wird vermieden, dass die Beinkleider des Fahrradfahrers mit dem Kettenblatt oder der Kette in Berührung kommen, sodass diese selbst bei nassen Wetterverhältnissen nicht verschmutzt werden.

Während des Fahrens klappen die Seitenlappen des Basisteils durch den Fahrtwind leicht zur Seite hin auf, sodass auch die Unterschenkel und die Füsse des Fahrradfahrers wirksam geschützt werden.

Durch die einfache Handhabung der erfindungsgemässen Schutzverkleidung liegt dessen Nutzungsschwelle äusserst tief. Da sie keinerlei störende Auswirkungen auf die Lenkung des Fahrrads mit sich bringt, kann sie - im Gegensatz etwa zu den sperrigen Konstruktionen der DE 196 36 676 und der DE 100 09 241 - auch permanent montiert am Fahrrad belassen werden.

Durch geeignete Wahl des verwendeten Materials bzw. der Farbe der Schutzverkleidung kann überdies die Sichtbarkeit des Fahrrads und somit die Sicherheit des Fahrradfahrers im Strassenverkehr stark erhöht werden, was insbesondere bei schlechten Wetterverhältnissen von grosser Bedeutung ist. Als Material kommt jedes harte oder halbharte Material in Frage, das dem Fachmann als für die entsprechenden zwecke geeignet bekannt ist. In der Regel ist die Schutzvorrichtung aus einem wasserundurchlässigen flexiblen Material, vorzugsweise einem wasserundurchlässigen textilen Material gefertigt. Als geeignetes Material kann etwa zeltplanenstoff, plastifiziertes Gewebe und/oder Rucksackstoff verwendet werden, beispielsweise das unter der Handelsbezeichnung Cordura^{®} erhältliche Material. Alternativ ist etwa auch eine Plastikfolie denkbar. Auf das verwendete Material kann im Sinne einer erhöhten Sichtbarkeit ein lichtreflektierendes Element aufgebracht werden.

Gemäss einer bevorzugten Ausführungsform weist der Mittelbereich der Schutzverkleidung in dem im montierten Zustand bezüglich der Sattelstütze heckseitigen Bereich ein Versteifungselement auf. Somit wird zwischen dem Hinterrad und dem Sattel eine für das Spritzwasser des Hinterrads undurchlässige Schranke aufgespannt, wodurch insbesondere die Rückenpartie des Fahrradfahrers vor Nässe geschützt wird. Indem der besagte Bereich der Schutzverkleidung nicht durchhängt, wird zudem verhindert, dass er in die Speichen des Hinterrads gelangen kann. Obschon die Schutzvorrichtung in der Regel auch das Vorderrad des Fahrrads abdeckt, um den erwähnten Schutz vor Spritzwasser zu gewährleisten, ist die Lenkfreiheit in keiner weise beeinträchtigt. Somit gewährleistet das Fahrrad auch bei montierter Schutzverkleidung den üblichen Fahrkomfort und die übliche Fahrsicherheit, unabhängig davon, ob das Fahrrad ein Schutzblech aufweist oder nicht.

weiter ist bevorzugt, dass auch die Seitenlappen jeweils mindestens ein Versteifungselement aufweisen, sodass auch diese nicht in die Speichen gelangen können. Überdies liegt die Schutzverkleidung dadurch relativ eng am Fahrradgestell an, sodass die Tretbewegung nicht beeinträchtigt wird. Dabei ist es besonders bevorzugt, dass die Seitenlappen jeweils zwei versteifungselemente aufweisen, die strahlenförmig angeordnet sind, wobei sie vom im montierten Zustand frontseitigen Randbereich des jeweiligen Seitenlappens ausgehen. In der Regel sind die Versteifungselemente in das Material des Basisteils eingenäht.

Gemäss einer weiteren bevorzugten Ausführungsform weist das Basisteil der Schutzverkleidung eine Vorrichtung zur Befestigung der Schutzverkleidung am Sattel oder an der Sattelstütze des Fahrrads auf. Durch diese wird ein Verrutschen der am Fahrrad montierten Schutzverkleidung weitgehend unterbunden. Die Befestigungsvorrichtung ist vorzugsweise in dem im montierten Zustand unterhalb des Sattels liegenden Bereich des Mittelbereichs angeordnet. Sie umfasst in der Regel einen Riemen mit einem daran wahlweise angeordneten Befestigungselement, wie beispielsweise einem Haken, einer Öse, einem Clip, einem Klettverschluss, einer Schnalle, etc.

Ein Verrutschen der montierten Schutzverkleidung kann zusätzlich mittels einer am Basisteil angeordneten Vorrichtung zur Befestigung der Schutzverkleidung am Steuerrohr des Fahrrads minimiert werden. Diese liegt vorzugsweise in Form eines Riemens vor, der mit den Seitenlappen an deren frontseitigen Randbereichen verbunden ist, wobei vorzugsweise die Verbindung mit mindestens einem Seitenlappen lösbar ist. Denkbar ist etwa, dass diese lösbare Verbindung mittels eines Klettverschlusses bewerkstelligt wird.

Gemäss einer weiteren bevorzugten Ausführungsform weist der Durchlass mindestens eines der Seitenlappen Mittel zur Veränderung der Öffnungsweite auf. Dies erlaubt (bei grosser Öffnungsweite) einerseits ein einfaches Durchführen des Pedals und des Pedalarms beim Montierten der Schutzverkleidung und andererseits (bei verminderter Öffnungsweite) einen guten Schutz der Beinpartie vor Schmutz und Spritzwasser während des Gebrauchs.

Bevorzugt weist das Basisteil überdies Mittel zur Verbindung der Seitenlappen in dem im montierten Zustand unterhalb des Tretlagers liegenden Bereich auf.

Gemäss einer weiteren bevorzugten Ausführungsform weist das Basisteil mindestens zwei Durchbrüche auf, die dazu bestimmt sind, von einem um den Rahmen des Fahrrads greifenden Schloss durchgriffen zu werden. Dadurch kann das Fahrrad und/oder die Schutzvorrichtung einfach vor Diebstahl gesichert werden.

Zur Verstauung des Schlosses oder Werkzeugen oder Dingen, die dem Nutzer des Fahrrades hilfreich oder wichtig sind, kann das Basisteil zudem mindestens eine Tasche aufweisen.

Um bei nasser Witterung die Beinpartien einschliesslich der Hüfte möglichst vollständig vor Nässe zu schützen, kann gemäss einer bevorzugten Ausführungsform eine mit dem Basisteil verbundene Schürze vorgesehen sein, die Mittel zur Fixierung am Fahrradfahrer aufweist.

Die Schürze deckt im montierten Zustand frontseitig den Bereich der Beine des Fahrradfahrers ab, sodass diese wirksam vor Nässe und Fahrtwind geschützt werden. Durch die Schürze wird insbesondere gewährleistet, dass auch die Oberschenkel und die Hüfte des Fahrradfahrers gegen Nässe durch Regen von oben geschützt werden. In Kombination mit einer Regen- bzw. Windjacke, wie sie von Fahrradfahrern bei schlechter Witterung üblicherweise getragen wird, ergibt sich somit ein optimaler Schutz gegen Regen, Schmutz und Kälte. Die Schürze ist in der Regel mit Versteifungselementen ausgestattet, sodass sie im montierten Zustand ausserhalb des von den Beinpartien für die Tretbewegung benötigten Bereichs angeordnet ist. Dadurch wird ein unbehindertes Fahren gewährleistet.

Weiter ist bevorzugt, dass die Schürze mit dem Basisteil an dessen im montierten Zustand frontseitigen Randbereich verbunden ist. Dabei sind in der Regel in dem vom Fahrradfahrer abgewandten Randbereich der Schürze Mittel zur Verbindung mit dem Basisteil angeordnet. Denkbar ist etwa, dass dieses Verbindungsmittel in Form eines Seitenteils eines Reiss- oder Klettverschlusses vorliegt, dessen Seitenteilgegenstück im frontseitigen Randbereich des jeweiligen Seitenlappens angeordnet ist.

Gemäss einer bevorzugten Ausführungsform ist die Schürze über den gesamten frontseitigen Randbereich der beiden Seitenlappen mit diesen verbunden.

Besonders bevorzugt weist die Schürze in ihrem im montierten Zustand dem Fahrradfahrer zugewandten Bereich einen Hüftgurt zur Fixierung der Schürze am Fahrradfahrer auf. Dabei ist der Hüftgurt vorzugsweise derart ausgestaltet, dass er auf die gewünschte Länge eingestellt werden kann. Um ein rasches Absteigen des Fahrradfahrers, etwa in einer Notfallsituation, zu ermöglichen, weist der Hüftgurt vorzugsweise einen Verschluss oder eine andere Sollöffnungsstelle auf, der/die derart ausgestaltet ist, dass er/sie sich beim Überschreiten einer vorbestimmten Last selbständig öffnet. Alternativ dazu kann der Hüftgurt auch aus einem elastischen Material gefertigt werden.

Für den Verschluss des Hüftgurts kommen alle dem Fachmann bekannten Verschlussarten in Frage, etwa Schnallen, Koppelschlösser, Haken, Druckknöpfe oder Klettverschlüsse. Besonders bevorzugt sind Steckschnallen mit einer Überlastöffnung.

Um eine optimale Anpassung der Schürze an den Fahrradfahrer zu gewährleisten, weist diese bevorzugt einen flexiblen Bereich auf, der dazu bestimmt ist, direkt am Bauch des Fahrradfahrers anzuliegen. Der flexible Bereich ist bevorzugt aus Neopren^{®} oder einem ähnlichen Material gefertigt. Dadurch wird erreicht, dass sich auch während der Bewegung des Fahrradfahrers keine Falten bilden und die Fläche der Schürze somit während der Verwendung stets gespannt ist.

Die Erfindung wird anhand der Figuren weiter illustriert.

### Es zeigt rein schematisch:

- Fig. 1: eine Seitenansicht des Basisteils einer erfindungsgemässen Schutzverkleidung;
- Fig. 2: eine Seitenansicht des in Figur 1 gezeigten Basisteils von der bezüglich der Figur 1 abgewandten Seite;
- Fig. 3: eine Seitenansicht des Basisteils einer weiteren erfindungsgemässen Schutzverkleidung mit Verstärkungselementen;
- Fig. 4: eine Seitenansicht des in Figur 3 gezeigten Basisteils von der bezüglich der Figur 3 abgewandten Seite;
- Fig. 5: eine seiteansicht eines Fahrrads mit einem daran montierten Basisteil gemäss den Figuren 1 und 2;
- Fig. 6: eine Seiteansicht eines Fahrrads mit einer daran montierten Basisteil gemäss den Figuren 3 und 4;
- Fig. 7: eine Seiteansicht des Fahrrads mit dem daran montierten Basisteil gemäss Figur 5 während der Bedienung durch einen Fahrradfahrer;
- Fig. 8: eine Seitenansicht einer erfindungsgemässen Schutzverkleidung umfassend das Basisteils gemäss den Figuren 1 und 2 und eine mit dem Basisteil verbundene Schürze; und
- Fig. 9: eine Seitenansicht eines Fahrrads mit daran montierter Schutzverkleidung gemäss Fig. 8 während der Bedienung durch einen Fahrradfahrer.

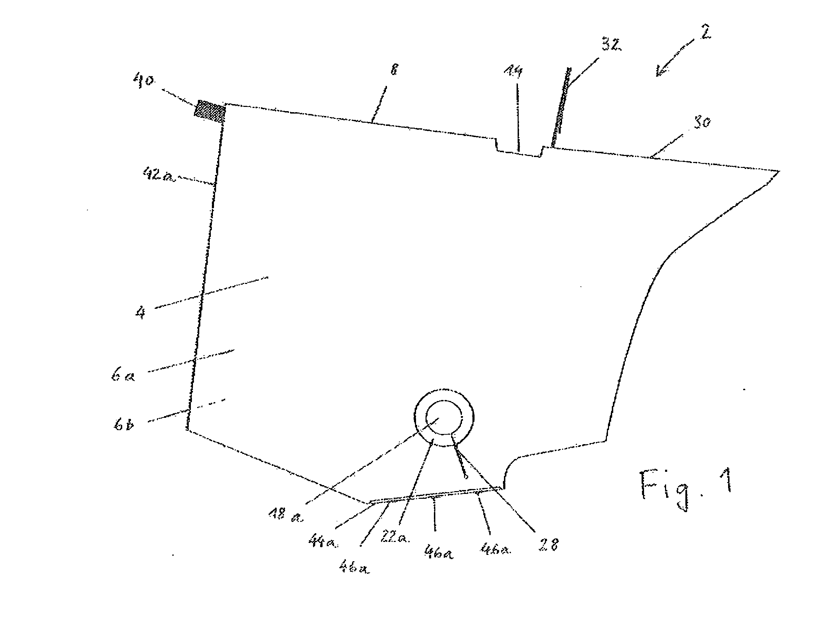

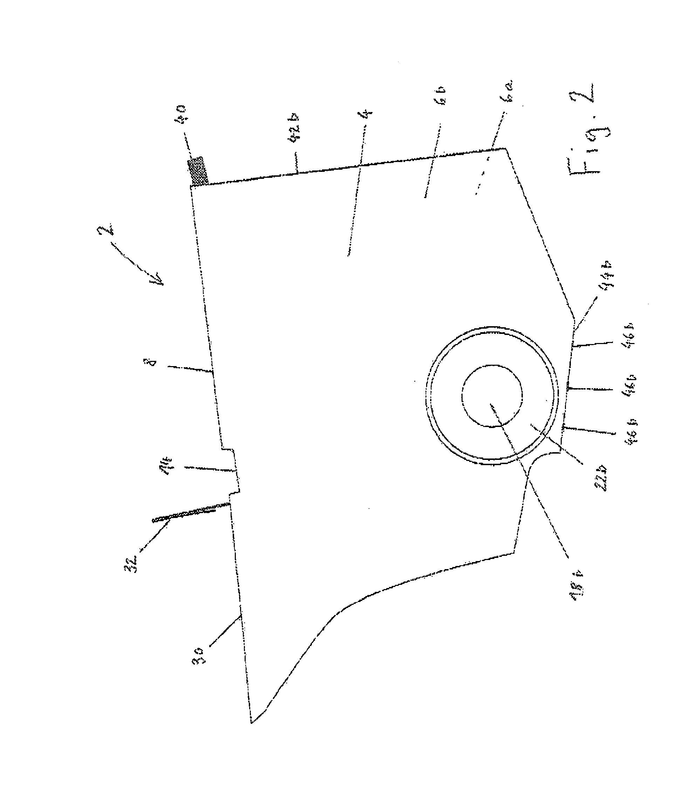

Das in Fig. 1 und Fig. 2 gezeigte Basisteil 4 der erfindungsgemässen Schutzverkleidung 2 umfasst zwei Seitenlappen 6a, 6b, die dazu bestimmt sind, auf jeweils einer Seite des Fahrrads angeordnet zu werden. Von diesen Seitenlappen 6a, 6b ist in Fig. 1 der bezüglich der Fahrtrichtung auf der linken Seite des Fahrrads angeordnete Seitenlappen 6a gezeigt, während der auf der rechten Seite angeordnete, in Fig. 2 gezeigte Seitenlappen 6b in Fig. 1 verdeckt ist. Die Seitenlappen 6a, 6b weisen im Profil eine im wesentlichen fünfeckige Form auf.

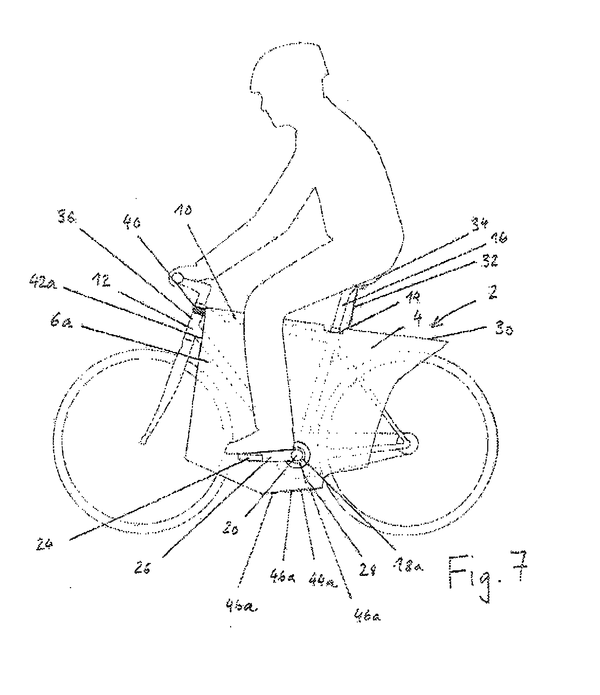

Das Basisteil 4 weist zwischen den Seitenlappen 6a, 6b einen Mittelbereich 8 auf, der - wie insbesondere etwa auch aus Fig. 7 ersichtlich ist - dazu bestimmt ist, im Bereich des Oberrohrs 10 des Fahrrads 12 angeordnet zu werden.

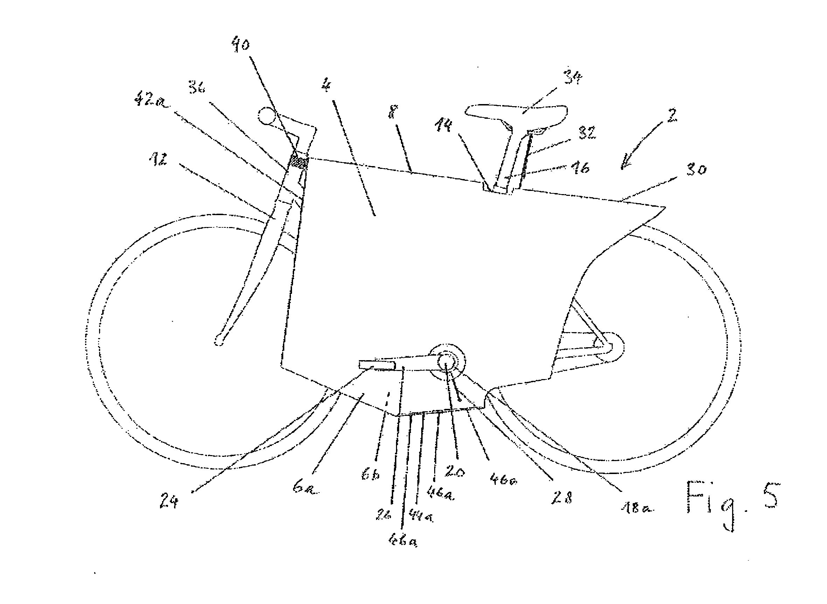

Der Mittelbereich 8 weist einen Durchlass 14 auf, welcher derart angeordnet ist, dass er in montiertem Zustand von der Sattelstütze 16 des Fahrrads 12 durchgriffen wird, wie etwa aus Fig. 5 und 7 ersichtlich ist. Eine besonders einfache Montage der Schutzverkleidung ist dann möglich, wenn die Öffnungsweite des Durchlasses 14 zumindest auf eine Öffnungsweite verstellbar ist, die es erlaubt, den Sattel durch den Durchlass 14 hindurchzuführen. Nach der Montage kann die Öffnungsweite des Durchlasses 14 bis zur Sattelstütze 16 hin verringert werden.

Zudem weisen die Seitenlappen 6a, 6b jeweils einen Durchlass 18a bzw. 18b auf, welcher derart angeordnet ist, dass er im montierten Zustand von der Tretkurbelwelle 20 des Fahrrads 12 durchgriffen wird, wie auch aus Fig. 5 und 7 ersichtlich ist. Der Durchlass 18a bzw. 18b weist radial innen liegend einen ringförmigen Bereich 22a bzw. 22b aus steifem, abriebfestem Material auf. Dieses verhindert einerseits ein Verhaken des Kettenblatts oder der Kette mit dem Basisteil, andererseits hält es einem Abrieb durch die Kette und des Kettenrads stand.

Der Durchlass 18a des in Fig. 1 gezeigten Seitenlappens 6a weist Mittel zur Veränderung der Öffnungsweite auf. Diese sind in Form eines radial schräg nach unten verlaufenden Schlitzes 28 ausgebildet, der verschliessbar ist. Denkbar ist etwa, dass der Schlitz 28 mittels eines Reiss- oder Klettverschlusses verschliessbar ist. Dadurch, dass der Bereich 22a aus steifem, abriebfestem Material ist, kann der Schlitz 28 nach der Montage sehr einfach geschlossen werden.

Der Durchlass 18b des in Fig. 2 gezeigten Seitenlappens weist eine grössere Öffnungsweite auf, als der in Fig. 1 gezeigte Durchlass 18a bei geschlossenem Schlitz 28. Zudem ist die Ringbreite des radial innen liegenden, ringförmigen Bereichs 22b grösser als beim Durchlass 18a gemäss Fig. 1.

Im heckseitig an den Durchlass 14 angrenzenden Bereich 30 des Mittelbereichs 8 ist eine Vorrichtung im Form eines Riemens 32 zur Befestigung der Schutzverkleidung 2 am Sattel 34 des Fahrrads 12 angeordnet.

Überdies weist das Basisteil 4 eine Vorrichtung zur Befestigung der Schutzvorrichtung 2 am Steuerrohr 36 auf. Diese Befestigungsvorrichtung liegt in Form eines Riemens 40 vor, der mit den Seitenlappen 6a, 6b an deren frontseitigen Randbereichen 42a, 42b verbunden ist. Vorzugsweise ist dabei mindestens ein Endbereich des Riemens 40 z.B. über einen Klettverschluss mit dem jeweiligen Seitenlappen 6a bzw. 6b lösbar verbunden.

Im unter dem Durchlass 18a bzw. 18b für die Tretkurbelwelle 20 liegenden Randbereich 44a bzw. 44b der Seitenlappen 6a, 6b sind Druckknöpfe bzw. Aufnahmen für Druckknöpfe 46a, 46b angeordnet, die es erlauben, die Seitenlappen 6a, 6b unter dem Tretlager miteinander zu verbinden und das Basisteil 4 somit zu schliessen. In den Figuren sind drei solcher Druckknöpfe bzw. solcher Aufnahmen gezeigt, denkbar ist aber auch jede andere Zahl.

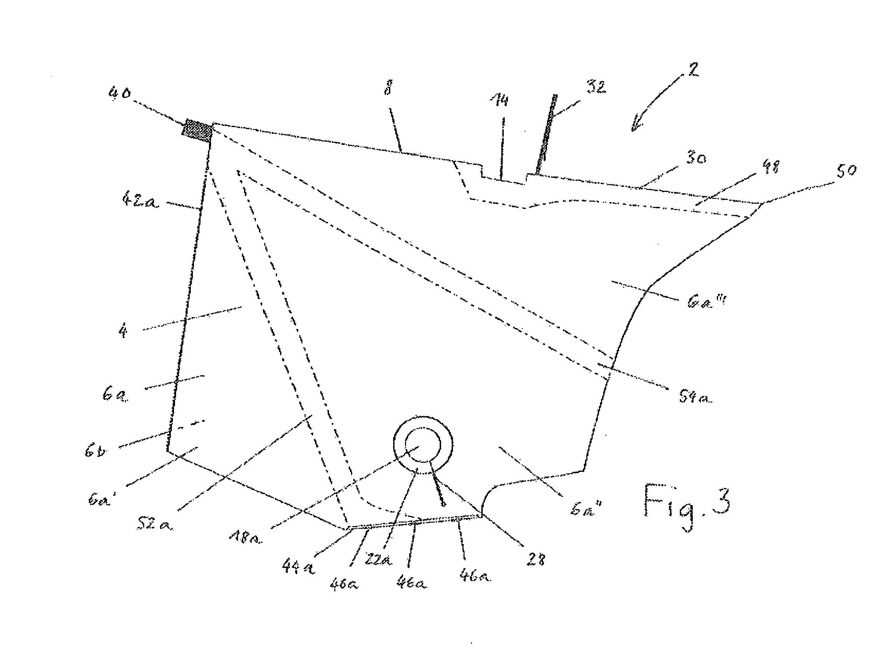

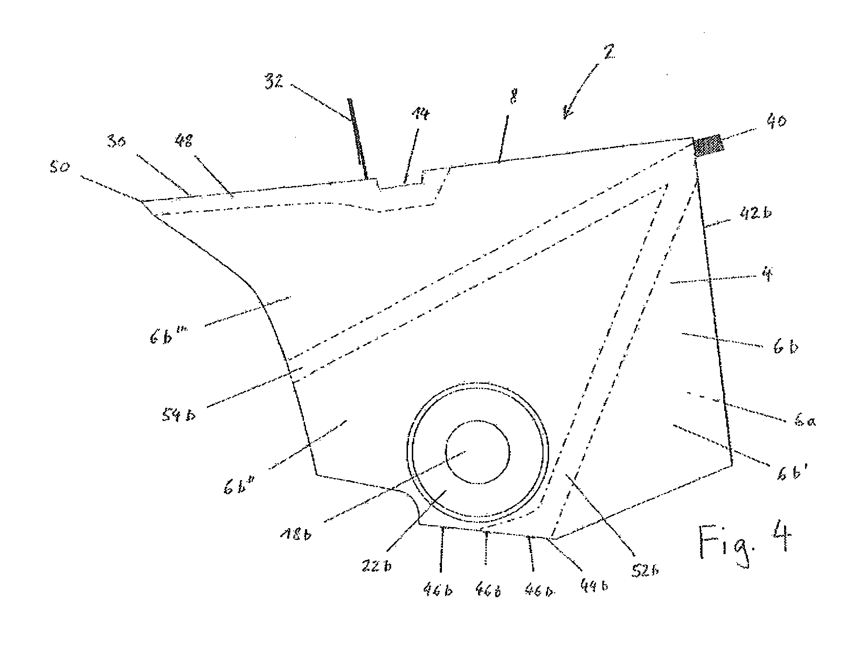

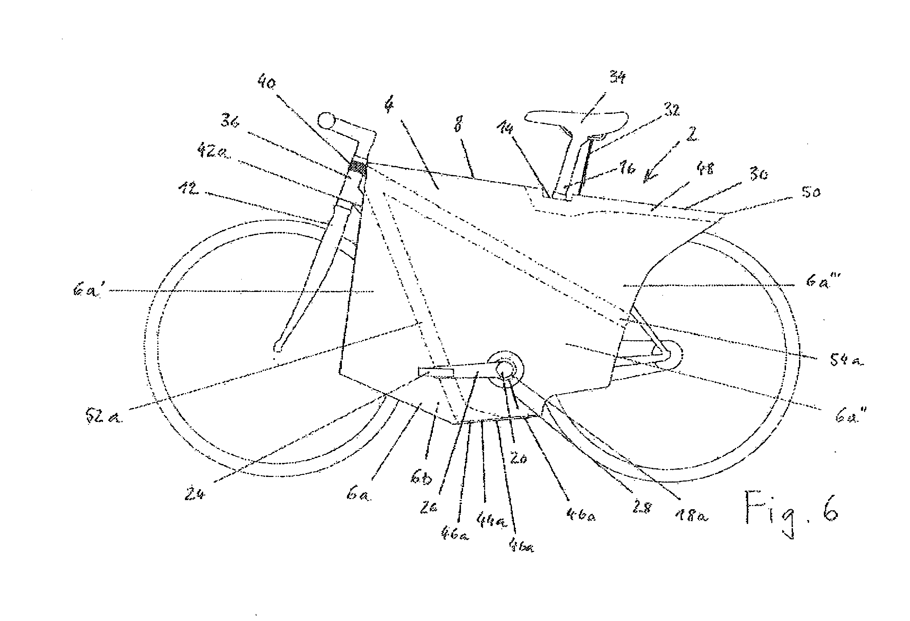

Wie aus den Fig. 3 und 4 und insbesondere auch aus der Fig. 6 ersichtlich ist, weist das Basisteil im Mittelbereich 14 ein Verstärkungselement 48 auf, das sich vom frontseitig an den Durchlass 14 angrenzenden Bereich bis an das heckseitige Ende 50 des Mittelbereichs 8 erstreckt.

Weiter weisen die Seitenlappen 6a, 6b jeweils zwei Versteifungselemente 52a, 54a bzw. 52b, 54b auf, die die Seitenlappen 6a, 6b strahlenförmig überspannen, wobei sie vom frontseitigen Randbereich 42a bzw. 42b des jeweiligen Seitenlappens 6a bzw. 6b ausgehen. Die Verstärkungselemente 52a, 54a bzw. 52b, 54b unterteilen die Seitenlappen 6a, 6b in jeweils drei Segmente 6a', 6a", 6a''' bzw. 6b', 6b", 6b''', ein erstes Segment 6a' bzw. 6b' zwischen dem frontseitigem Ende und dem ersten Verstärkungselement 52a bzw. 52b, ein zweites Segment 6a" bzw. 6b" zwischen dem ersten Verstärkungselement 52a bzw. 52b und dem zweiten Verstärkungselement 54a bzw. 54b und ein drittes Segment 6a''' bzw. 6b''' zwischen dem zweiten Verstärkungselement 54a bzw. 54b und dem Mittelbereich 8. Dabei weist das erste Segment 6a' bzw. 6b' und das dritte Segment 6a''' bzw. 6b''' ein im Wesentlichen dreieckiges Profil auf, während das zweite Segment 6a" bzw. 6b'' ein im Wesentlichen drachenförmiges Profil aufweist. Der im montierten Zustand von der Tretkurbelwelle 20 durchgriffene Durchlass 18a, 18b ist dabei im zweiten Segment 6a" bzw. 6b" angeordnet.

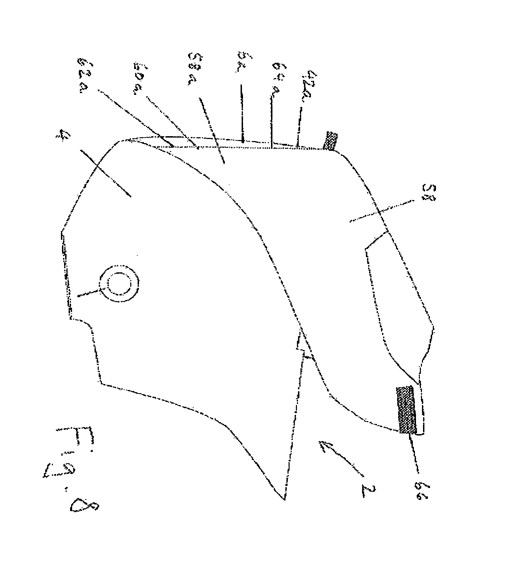

Die in Fig. 8 gezeigte Schutzverkleidung 2 umfasst zusätzlich zum Basisteil 4 eine Schürze 58. Die Schürze 58 umfasst zwei Schürzenlappen - von denen in Fig. 8 lediglich der Schürzenlappen 58a gezeigt ist - und ist mit dem Basisteil 4 am frontseitigen Randbereich 42a bzw. 42b des jeweiligen Seitenlappens 6a bzw. 6b mit diesem verbunden. Dazu sind in dem vom Fahrradfahrer abgewandten Randbereich 60a des jeweiligen Schürzenlappens 58a Mittel zur Verbindung mit dem Basisteil 4 bzw. dem jeweiligen Seitenlappen 6a angeordnet. In Fig. 8 liegt dieses Verbindungsmittel in Form eines Reissverschluss-Seitenteils 62a vor, dessen Seitenteilgegenstück 64a den frontseitigen Rand des jeweiligen Seitenlappens 6a bildet.

Besonders bevorzugt weist die Schürze 58 in ihrem im montierten zustand dem Fahrradfahrer zugewandten Bereich einen Hüftgurt 66 zur Fixierung der Schürze am Fahrradfahrer auf. Überdies weist die Schürze 58 einen flexiblen Bereich auf, der dazu bestimmt ist, direkt am Bauch des Fahrradfahrers anzuliegen.

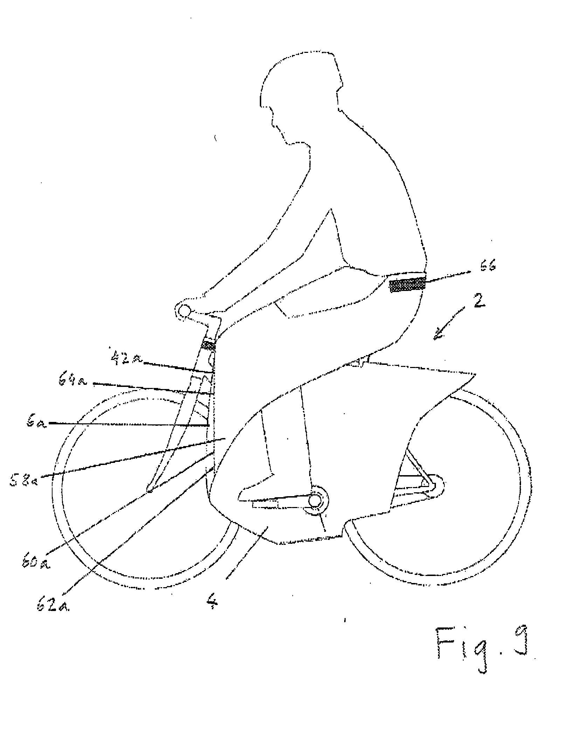

Die Schürze 58 ist mit Verstärkungselementen (nicht gezeigt) ausgestaltet. Diese heben die Schürze im Bereich der Oberschenkel des Fahrradfahrers an. Aufgrund der dadurch erreichten Formstabilität wird gewährleistet, dass die Schürze 58 ausserhalb des von den Beinpartien für die Tretbewegung benötigten Bereichs angeordnet ist, wie insbesondere aus Fig. 9 ersichtlich ist.

Die Schutzverkleidung der vorliegenden Erfindung wird in der Regel derart am Fahrrad 12 montiert, dass in einem ersten Schritt der Mittelbereich 8 ein Stück weit geöffnet wird, dann der Sattel 34 und die Sattelstütze 16 durch den entstanden Durchlass hindurchgeführt werden und der Mittelbereich 8 wieder bis an die Sattelstütze geschlossen wird. Dann werden die Pedale 24 und Pedalarme 26 der Tretkurbel durch den jeweiligen Durchlass 18a bzw. 18b der Seitenlappen 6a bzw. 6b hindurchgeführt und die unter dem jeweiligen Durchlass 18a bzw. 18b liegenden Randbereiche 44a bzw. 44b der Seitenlappen mittels der Druckknöpfe bzw. der Aufnahmen für die Druckknöpfe 46a, 46b miteinander verbunden.

Die Schutzverkleidung wird mittels des Riemens 32 am Sattel 34 befestigt, indem ein dazu vorgesehener Haken in das Sattelgestell eingehängt und die Vorrichtung leicht vorgespannt wird. Zudem wird das Basisteil 4 mit dem Riemen 40 am Steuerrohr 36 fixiert. Weiter ist denkbar, die Seitenlappen 6a, 6b des Basisteils 4 im Bereich der Unterrohres des Fahrrads miteinander zu verbinden und/oder am Unterrohr zu befestigen.

Die Schürze 58 wird mit ihrem Reissverschluss-Seitenteil 62a am entsprechenden Seitenteil-Gegenstück 64a des jeweiligen Seitenlappens 6a bzw. 6b verbunden. Beim Aufsteigen auf das Fahrrad wird schliesslich der Hüftgurt 66 um die Hüfte gebunden und angezogen, wodurch die Schürze am Fahrradfahrer fixiert wird. Dabei weist der Hüftgurt 66 vorzugsweise eine Sollöffnungsstelle auf, die sich beim Überschreiten einer vorbestimmten Last selbständig öffnet.

## Patentansprüche

1. Schutzverkleidung für ein Fahrrad umfassend ein Basisteil (4), das zwei Seitenlappen (6a, 6b) und einen zwischen den Seitenlappen (6a, 6b) angeordneten Mittelbereich (8) umfasst, wobei die Seitenlappen (6a, 6b) dazu bestimmt sind, auf jeweils einer Seite des Fahrrads angeordnet zu werden, und der Mittelbereich (8) dazu bestimmt ist, im Bereich des Oberrohres des Fahrrads angeordnet zu werden, wobei der Mittelbereich (8) einen Durchlass (14) aufweist, welcher derart angeordnet ist, dass er im montierten Zustand von der Sattelstütze des Fahrrads durchgriffen wird, **dadurch gekennzeichnet, dass** die Seitenlappen (6a, 6b) jeweils einen Durchlass (18a bzw. 18b) aufweisen, welcher derart angeordnet ist, dass er im montierten Zustand von der Tretkurbelwelle des Fahrrads durchgriffen wird.

2. Schutzverkleidung gemäss Anspruch 1, **dadurch gekennzeichnet, dass** sie im Wesentlichen aus einem mindestens annähernd wasserundurchlässigen flexiblen Material ist, vorzugsweise einem mindestens annähernd wasserundurchlässigen textilen Material.

3. Schutzverkleidung gemäss Anspruch 1 oder 2**, dadurch gekennzeichnet, dass** der Mittelbereich (8) in dem im montierten Zustand bezüglich der Sattelstütze heckseitigen Bereich (30) ein Versteifungselement (48) aufweist.

4. Schutzverkleidung gemäss einem der vorhergehenden Ansprüche, **dadurch gekennzeichnet, dass** die Seitenlappen (6a, 6b) jeweils mindestens ein Versteifungselement (52a, 54a bzw. 52b, 54b) aufweisen.

5. Schutzverkleidung gemäss Anspruch 4, **dadurch gekennzeichnet, dass** die Seitenlappen (6a, 6b) jeweils zwei Versteifungselemente (52a, 54a bzw. 52b, 54b) aufweisen, die strahlenförmig angeordnet sind, wobei sie vom im montierten zustand frontseitigen Randbereich (42a bzw. 42b) des jeweiligen Seitenlappens (6a, 6b) ausgehen.

6. Schutzverkleidung gemäss einem der vorhergehenden Ansprüche, **dadurch gekennzeichnet, dass** das Basisteil (4) eine Vorrichtung (32) zur Befestigung der Schutzverkleidung am Sattel des Fahrrads aufweist.

7. Schutzverkleidung gemäss einem der vorhergehenden Ansprüche, **dadurch gekennzeichnet, dass** das Basisteil (4) eine Vorrichtung (40) zur Befestigung der Schutzverkleidung am Steuerrohr des Fahrrads aufweist.

8. Schutzverkleidung gemäss einem der vorhergehenden Ansprüche, **dadurch gekennzeichnet, dass** der Durchlass (18a bzw. 18b) mindestens eines der beiden Seitenlappen (6a, 6b) Mittel (28) zur Veränderung der Öffnungsweite aufweist.

9. Schutzverkleidung gemäss einem der vorhergehenden Ansprüche, **dadurch gekennzeichnet, dass** das Basisteil (4) Mittel (46a, 46b) zur Verbindung der Seitenlappen (6a, 6b) in dem im montierten Zustand unterhalb des Tretlagers des Fahrrads liegenden Bereich aufweist.

10. Schutzverkleidung gemäss einem der vorhergehenden Ansprüche, **dadurch gekennzeichnet, dass** das Basisteil (4) mindestens zwei Durchbrüche aufweist, die dazu bestimmt sind, im montierten Zustand von einem um den Rahmen des Fahrrads greifenden Schloss durchgriffen zu werden.

11. Schutzverkleidung gemäss einem der vorhergehenden Ansprüche, **dadurch gekennzeichnet, dass** das Basisteil (4) mindestens eine Tasche aufweist.

12. Schutzverkleidung gemäss einem der vorhergehenden Ansprüche, **gekennzeichnet durch** eine mit dem Basisteil (4) verbundene Schürze (58), die Mittel zur Fixierung am Fahrradfahrer aufweist.

13. Schutzverkleidung gemäss Anspruch 12, **dadurch gekennzeichnet, dass** die Schürze (58) mit dem Basisteil (4) an dessen im montierten Zustand frontseitigen Randbereich verbunden ist.

14. Schutzverkleidung gemäss Anspruch 12 oder 13, **dadurch gekennzeichnet, dass** die Schürze (58) einen Hüftgurt (66) aufweist.

15. Schutzverkleidung gemäss Anspruch 14, **dadurch gekennzeichnet, dass** der Hüftgurt (66) eine Sollöffnungsstelle aufweist, die derart ausgestaltet ist, dass sie sich beim Überschreiten einer vorbestimmten Last selbständig öffnet.
